# DEMANDE DE BREVET EUROPEEN

(11) **EP 1 245 939 A1**
(43) Date de publication de la demande: **02.10.2002**
(21) Numéro de dépôt: 02290568.1
(22) Date de dépôt: 07.03.2002
(51) Int. Cl.: G01M 3/18

(54) **Procédé pour la prévention de dégâts dus à des fuites de liquide et installation de tuyauteries correspondantes**

(30) Priorité: 26.03.2001 FR 0104043
(71) Demandeur: Ketz, Joseph, 93340 Le Raincy (FR); Jacquet, Gérard Jean Marc, 93140 Bondy (FR)
(72) Inventeur: Ketz, Joseph, 93340 Le Raincy (FR); Jacquet, Gérard Jean Marc, 93140 Bondy (FR)
(74) Mandataire: Rataboul, Michel

(57) **Abrégé**

Le procédé est destiné à la prévention de dégâts dus à des fuites de liquide d'une tuyauterie dans lequel circule ledit liquide, du type selon lequel on détecte l'existence de liquide de fuite à l'extérieur de tuyaux.

Il est caractérisé en ce que l'on détecte l'existence de liquide à l'extérieur de tuyaux (1) en pente ou verticaux, successivement à au moins deux niveaux distincts (13-14-15) afin de déduire l'existence d'une fuite par le déplacement de liquide en gouttes (A) ou en filets, et non par la simple présence de liquide à un endroit donné.

Parmi les applications de l'invention, on peut citer les installations d'alimentation et d'évacuation d'eau dans des immeubles.

## Description

Il existe de nombreuses installations comportant une tuyauterie pour la mise en circulation d'un liquide, quelle que soit les caractéristiques du liquide et le mode de circulation : en circuit fermé ou ouvert, avec ou sans recyclage, avec élimination du liquide après avoir effectué un parcours, etc.

On peut citer les appareils de propulsion de navires à vapeur, traditionnels ou nucléaires, les centrales nucléaires de production d'électricité, les usines de production de produits chimiques, les laboratoires utilisant des produits dangereux, et tout particulièrement les bâtiments alimentés en eau potable, et/ou comprenant une installation de chauffage central.

Par nature, une fuite de liquide est présente hors du tuyau qui contient ce liquide et sa détection est difficile du fait même que cette fuite peut se produire dans des endroits très variés, aléatoires.

De ce fait, les détecteurs connus s'avèrent inefficaces car ils interviennent souvent après que les dégâts aient été faits.

C'est le cas, notamment, des détecteurs disposés dans les appartements qui donnent l'alarme alors que la moquette et les tapis sont déjà gorgés d'eau.

On a déjà pensé à régler le problème de la localisation d'une fuite dans un immeuble en utilisant la propension de l'eau à se frayer un passage le long des tuyaux en général, c'est-à-dire pas seulement celui dont les première gouttes sont issues.

Une telle solution est décrite dans la demande de brevet français 95/13129 aux noms des demandeurs, solution qui consiste à disposer des détecteurs contre des tuyaux verticaux et à l'extérieur de ceux-ci, ces détecteurs comprenant un dispositif de rétention d'eau associé à deux électrodes disjointes formant un circuit ouvert que l'eau de fuite ferme en établissant le contact entre les électrodes, ce qui est exploité pour commander la fermeture d'une électrovanne et la mise en fonction d'une alarme.

Il s'avère que cette solution n'est pas entièrement satisfaisante en raison de la survenance fréquente dans les dispositifs de rétention d'eau qui ne résulte pas d'une fuite mais, par exemple, de la condensation ou d'infiltrations étrangères à l'installation, ce qui a pour conséquence des fausses alertes et des fermetures de circuit aussi inutiles qu'intempestives.

La présente invention propose une solution nouvelle qui ne se contente pas de la présence statique de liquide à un endroit donné mais qui identifie les fuites réelles.

A cette fin, l'invention a pour objet un procédé pour la prévention de dégâts dus à des fuites de liquide d'une tuyauterie dans lequel circule ledit liquide, du type selon lequel on détecte l'existence de liquide de fuite à l'extérieur de tuyaux, caractérisé en ce que l'on détecte l'existence de liquide à l'extérieur de tuyaux en pente ou verticaux, successivement à au moins deux niveaux distincts afin de déduire l'existence d'une fuite par le déplacement de liquide en gouttes ou en filets, et non par la simple présence de liquide à un endroit donné.

Selon d'autres caractéristiques de ce procédé :
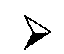 on détecte l'existence de liquide à trois niveaux distincts : un niveau supérieur et deux niveaux inférieurs rapprochés ;
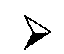 on récupère le liquide ayant passé par deux niveaux distincts et on l'évacue ;
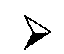 on commande une action telle que la fermeture et/ou l'ouverture d'électrovannes, et/ou la mise en fonction d'un dispositif d'alarme, après que l'on ait détecté le passage de liquide à deux niveaux distincts ;
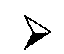 on temporise la commande d'action, afin qu'il s'écoule un certain temps entre l'instant de la détection et l'instant de la commande ;
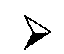 on crée un signal de détection pour chaque passage de liquide, afin de différencier un passage par gouttes successives d'un passage par filet continu, et l'on commande une ou plusieurs actions de manière différente selon le nombre et la fréquence des signaux de détection.

L'invention a également pour objet une installation de circulation de liquide, adaptée à la prévention de dégâts dus à des fuites, formée d'une tuyauterie comprenant d'une part des tuyaux dits « d'arrivée » dont l'entrée est raccordée à au moins une arrivée de liquide et dont la sortie est éventuellement ramifiée en dérivations et, d'autre part, des tuyaux dits « d'évacuation » dont l'entrée est éventuellement ramifiée en dérivations et dont la sortie est raccordée soit à une évacuation soit à un dispositif de traitement et de recyclage, du type selon lequel des détecteurs de liquide de fuite sont placés à l'extérieur de tuyaux et assujettis à ceux-ci, caractérisé en ce que chaque détecteur comprend un collecteur de liquide situé contre la paroi extérieure d'un tuyau en pente ou vertical et qui est raccordé à l'entrée d'un conduit d'évacuation auquel sont fixés au moins deux palpeurs indépendants qui sont placés à au moins deux niveaux distincts et qui sont reliés à un appareil susceptible d'une part de générer des signaux propres à chaque palpeur et constituant autant d'informations, et d'autre part de traiter ces informations, puis de provoquer, éventuellement, la mise en action d'un ou plusieurs dispositifs de sécurité tels qu'électrovanne(s) et/ou alarme(s).

Selon d'autres caractéristiques de cette installation :
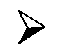 le collecteur de liquide est une gouttière circulaire qui ceinture le tuyau ;
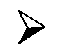 le collecteur de liquide est un godet placé contre le tuyau ;
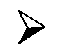 le collecteur de liquide comporte une bague placée autour d'un tuyau et munie d'une garniture d'étanchéité ;
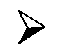 la partie de tuyauterie composée d'au moins un tuyau vertical d'arrivée et d'au moins un tuyau vertical d'évacuation munis de piquages de dérivations étant située dans un espace spécifique, un détecteur au moins est prévu soit sur un tuyau vertical, soit sur chaque dérivation raccordée au tuyau d'arrivée ;
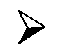 l'espace spécifique étant sectionné par des cloisons transversales traversées par les tuyaux verticaux, il y à au moins un détecteur au-dessous de chaque cloison transversale, soit sur un tuyau vertical, soit sur chaque dérivation raccordée au tuyau d'arrivée ;
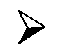 la sortie de chaque conduit d'évacuation est raccordée à une entrée d'un boîtier munie d'un clapet de non-retour, boîtier qui présente deux sorties dont l'une située à la partie inférieure du boîtier est raccordée au conduit d'évacuation, et l'autre située à la partie supérieure du boîtier est raccordée à une conduite spécifique à l'évacuation des fuites et normalement vide, qui s'étend jusqu'au niveau le plus bas de l'installation ;
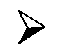 le boîtier est muni d'un détecteur de liquide placé sur la sortie située à la partie supérieure dudit boîtier ;
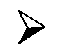 l'appareil auquel sont reliés les palpeurs des détecteurs est connecté à l'élément moteur d'électrovannes dont une au moins est intercalée sur le tuyau d'arrivée, et une sur chaque dérivation raccordée au tuyau d'arrivée ;
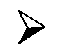 les détecteurs et les électrovannes qui sont intercalées sur les dérivations et qui sont commandées par l'appareil en fonction de ces mêmes détecteurs, sont placés à deux niveaux différents, les détecteurs étant au-dessous des électrovannes ;
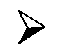 elle est destinée à la circulation d'eau dans un bâtiment, et comprend d'une part au moins un tuyau d'arrivée, dit « colonne montante » ayant une entrée qui est raccordée à au moins une arrivée d'eau telle qu'un réseau de distribution, et une sortie qui est raccordée par des dérivations à des robinets d'appareils utilisateurs d'eau, et d'autre part au moins un tuyau d'évacuation dit « colonne d'évacuation » ayant une entrée raccordée par des dérivations à des orifices de vidange d'appareils utilisateurs d'eau, et une sortie qui est raccordée à un réceptacle d'évacuation tel qu'un réseau d'égouts ;
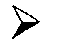 l'installation comprenant une colonne montante pour l'eau froide et une colonne montante pour l'eau chaude, un détecteur au moins est prévu sur chacune des deux colonnes montantes ;
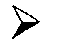 elle se trouve dans un bâtiment du type collectif à plusieurs étages et plusieurs locaux privatifs, et comprenant un espace vertical spécifique dit « gaine technique » dans lequel se trouvent la colonne montante et la colonne d'évacuation qui sont chacune raccordées à au moins une dérivation non verticale pour chacun des locaux privatifs, et l'installation est caractérisée en ce qu'un détecteur au moins est prévu soit sur une colonne, soit sur chaque dérivation ;
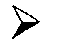 la gaine technique étant sectionnée par des planchers situés à chaque étage et traversés par la tuyauterie, il y a au moins un détecteur au-dessous de chaque plancher, soit sur une colonne, soit sur une dérivation ;
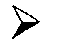 l'appareil auquel sont reliés les palpeurs des détecteurs est connecté à l'élément moteur d'électrovannes dont une, au moins, est intercalée à la partie inférieure de la/chaque colonne montante ;
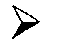 l'appareil auquel sont reliés les palpeurs des détecteurs est connecté à l'élément moteur d'électrovannes intercalées sur les dérivations raccordées à une colonne montante ;
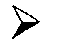 elle comprend un tuyau d'arrivée et un tuyau d'évacuation dit « de retour » raccordés d'une part à une chaudière et d'autre part à des radiateurs de chauffage, et deux électrovannes sont intercalées à la partie inférieure respectivement du tuyau d'arrivée et du tuyau de retour ;
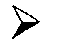 elle comprend un tuyau d'arrivée et un tuyau d'évacuation dit « de retour » raccordés d'une part à une chaudière et d'autre part à des radiateurs de chauffage et une électrovanne est intercalée sur chaque dérivation du tuyau d'arrivée ;
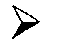 les détecteurs sont réalisés en matériau non métallique, excepté des conducteurs électriques qui équipent les palpeurs.
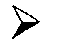 certains au moins des détecteurs sont munis d'un contacteur relié électriquement à l'appareil et susceptible de provoquer le déclenchement d'une alarme lorsqu'il n'est plus dans la position normale qui est la sienne lors de la mise en place des détecteurs ;
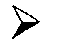 les tuyaux auxquels un détecteur est assujetti sont protégés contre l'humidité et la condensation, notamment par un revêtement hydrophobe, une garniture en mousse synthétique, un dispositif d'aération et/ou de chauffage, ou analogue ;
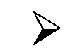 certains au moins des collecteurs de liquide sont surmontés d'un cache qui laisse passer le liquide ruisselant contre le tuyau mais non les liquides susceptibles de tomber librement, notamment de l'eau de condensation.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en coupe illustrant le procédé conforme à l'invention.

La figure 2 est une vue schématique partielle en coupe d'une installation d'eau dans un immeuble collectif mettant en oeuvre le procédé de l'invention.

Selon le procédé de l'invention, on détecte une fuite de liquide dans les conditions où, selon toutes probabilités, il se produira un déplacement de liquide sous forme de gouttes ou sous forme de filets selon l'importance de la fuite. On ne détecte donc pas un liquide en stagnation car l'expérience montre que les détecteurs existants utilisés pour détecter la « présence » de liquide réagissent trop lentement pour éviter les dégâts. Au mieux ces dégâts sont minorés mais ils ne sont pratiquement jamais évités.

Bien entendu, le procédé de l'invention s'adapte sinon à toutes les situations existantes, au moins à la plupart d'entre elles car il faut et il suffit que la tuyauterie surveillée ait des segments verticaux ou en forte pente pour provoquer un déplacement de liquide par le simple effet de la gravité.

On constate facilement que, où que soit localisée une fuite dans une installation ayant une tuyauterie, le liquide qui fuit coule le long de la paroi extérieure d'un tuyau et c'est cet écoulement que l'on détecte afin de prendre des mesures adaptées à l'importance de la fuite et à la gravité des conséquences qu'elle peut avoir sur les personnes et sur les biens.

Comme un tel écoulement le long de la paroi extérieure d'un tuyau peut se produire à n'importe quel point de sa circonférence, il est bon de disposer un collecteur qui doit arrêter l'écoulement, qu'il s'agisse de gouttes ou de filets, tout autour du tuyau surveillé. Ensuite, on évacue le liquide dans un conduit vertical ou en forte pente descendante et l'on détecte l'existence de liquide dans ce conduit spécifique à au moins deux niveaux différents, ce qui permet de déduire non pas la simple présence de liquide mais la fréquence de gouttes successives ou l'existence d'un filet continu, ce qui renseigne de manière précise sur l'importance de la fuite et, comme on le décrit plus loin, sur sa localisation.

Pour illustrer l'invention, on a choisi l'exemple d'un installation d'eau dans un immeuble, mais il va de soi que l'invention peut s'appliquer à de nombreux autres cas.

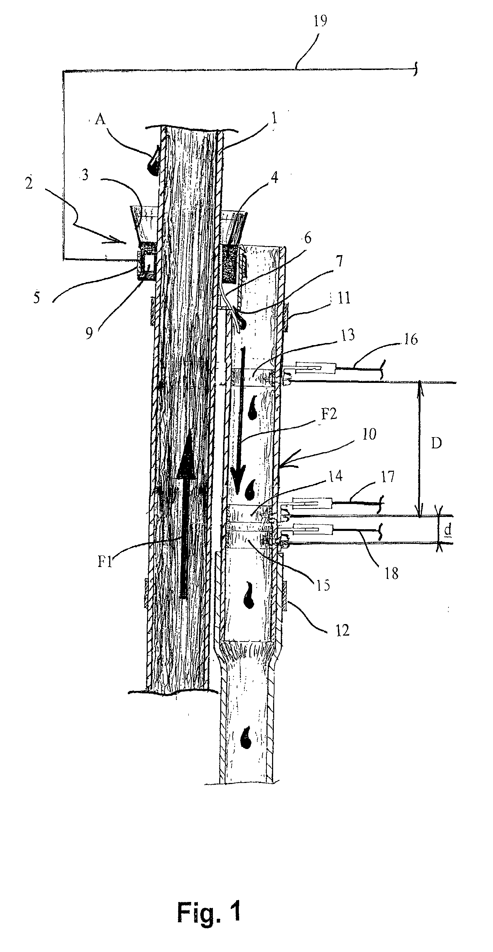

Sur la figure 1, on voit une colonne montante 1 contenant de l'eau qui y circule de bas en haut selon la flèche F1, depuis une vanne d'entrée (non représentée) au sous-sol d'un immeuble jusqu'aux appareils utilisateurs : lavabos, éviers, douches, etc. de tous les étages.

Autour de la colonne 1, on dispose un détecteur 2 constituant un collecteur de liquide et qui est formé d'une collerette supérieure 3, d'une garniture d'étanchéité 4 et d'un collier de serrage 5, cet ensemble constituant une gouttière circulaire qui ceinture la colonne 1. Une languette flexible 6 en matériau lisse favorisant l'écoulement de liquide est placée contre la paroi extérieure de la colonne 1 et fixée au contact de la garniture 4 afin de recueillir l'eau (symbolisée par une goutte A) qui a coulé sur la colonne 1 au-dessus du collecteur 2, et qui a atteint la garniture 4.

La languette 6 a une extrémité libre qui est engagée dans une ouverture latérale 7 d'un conduit d'évacuation vertical 10 fixé à côté de la colonne 1 par des colliers 11 et 12.

On observe que la goutte A est représentée à un endroit diamétralement opposé au conduit d'évacuation 10 afin de montrer que le collecteur 2 récupère l'eau de fuite tout autour de la colonne 1 et la dirige toujours vers le conduit d'évacuation 10 quelle que soit la génératrice de la colonne 1 selon laquelle l'eau coule.

Le conduit d'évacuation 10 est muni de trois palpeurs 13, 14 et 15 conçus pour être sensibles au passage de la moindre quantité d'eau dans le conduit 10, verticalement selon la flèche F2, c'est-à-dire en chute libre naturelle.

L'Homme de métier sait réaliser de tels palpeurs fonctionnant selon différents principes physiques : effet Doppler, faisceau électrique, etc. et on les a représentés ici très schématiquement sous forme d'un simple anneau disposé contre la face intérieure du conduit d'évacuation 10.

Le palpeur supérieur 13 est séparé du palpeur suivant 14 selon une distance D plus grande que la distance d qui sépare ce palpeur 14 du palpeur inférieur 15, de sorte que le passage d'eau tombant dans le conduit 10 est d'abord détecté par le palpeur 13, puis par le détecteur 14, puis tout de suite après par le palpeur 15, ce qui permet d'effectuer plusieurs contrôles, chaque palpeur étant relié par une ligne électrique 16, 17, 18 à un appareil non visible sur la figure 1, conçu pour exploiter les informations reçues de ces palpeurs.

En effet :
■ le passage de gouttes distinctes les unes des autres est détecté par les palpeurs 14 et 15 qui sont très proches l'un de l'autre et qui émettent chacun un signal ponctuel à chaque passage,
■ le passage d'un filet continu est détecté par le palpeur 13 et simultanément par les palpeurs 14 et/ou 15 puisque du seul fait qu'il est continu, le filet est détecté selon toute sa hauteur, les palpeurs émettant des signaux plus ou moins continus mais simultanés ou si rapprochés que la fuite est immédiatement identifiée comme très importante,
■ le passage de gouttes nombreuses est détecté par les trois palpeurs mais de manière discontinue et non simultanée, et les signaux significatifs proviennent des deux palpeurs 14 et 15 qui émettent des signaux toujours distincts mais plus ou moins fréquents selon le nombre de gouttes.

La gestion des signaux reçus est assurée par un logiciel qui déclenche différentes actions selon les caractéristiques de ces signaux : mise en marche d'une alarme, fermeture de vannes, émission d'avertissements, etc.

Après être passé devant les palpeurs et avoir ainsi été détectée, l'eau continue de tomber selon la flèche F2 et est évacuée à l'égout ou récupérée dans un réservoir et éventuellement traitée pour recyclage ou élimination .

Lorsque le liquide (qui bien entendu peut ne pas être de l'eau) véhicule ou contient des substances nocives ou dangereuses, ou bien quand elle présente une radioactivité importante, il ne peut être évacué sans précautions mais les opérations nécessaires au traitement des fuites d'un tel liquide ne font pas partie de l'invention et n'ont donc pas besoin d'être décrites.

En revanche, l'invention permet une intervention très rapide car aussitôt que les palpeurs 13, 14 et 15 ont été sensibilisés par le passage de liquide comme on vient de le décrire, l'appareil déclenche immédiatement une ou plusieurs opérations programmées, parmi lesquelles il peut se trouver des mesures de sécurité propres à chaque cas.

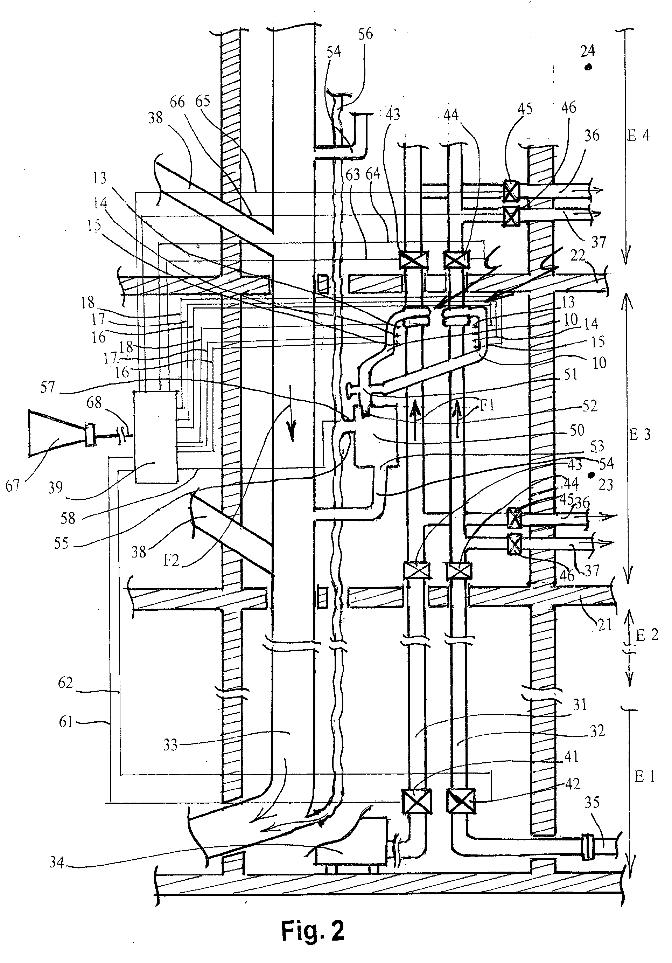

On va maintenant décrire un exemple d'application de l'invention à un circuit d'eau complet dans un immeuble, en référence à la figure 2.

Avec cet exemple, le bâtiment présente plusieurs niveaux de plancher référencés ici 21 et 22 pour des locaux privatifs 23 et 24 mitoyens d'un espace vertical appelé « gaine technique » 25 dans lequel sont disposés les tuyaux d'arrivée d'eau claire et de départ des eaux usées.

Pour des raisons de sécurité incendie, la gaine technique 25 est sectionnée par des planchers 26 et 27 situés aux mêmes niveaux que les planchers 21 et 22 des locaux 23 et 24. La tuyauterie s'étend verticalement depuis le sous-sol de l'immeuble jusqu'au dernier étage et elle comprend, ici, une colonne montante d'eau chaude 31, une colonne montante d'eau froide 32 et un tuyau de descente 33 pour les eaux usées.

L'entrée de la colonne d'eau chaude 31 est branchée à la sortie d'une chaudière 34 et l'entrée de la colonne d'eau froide 32 est branchée à un réseau extérieur de distribution 35.

Les colonnes 31 et 32 se ramifient en dérivations 36 et 37 à chaque étage E pour être reliées aux appareils utilisateurs d'eau (non représentés) : lavabos, éviers, douches, lave-vaisselle, lave-linge, etc., comme cela est bien connu en soi.

Le tuyau de descente 33 est lui aussi ramifié car il reçoit à chaque étage E au moins un tuyau d'évacuation 38 recevant les tuyaux d'évacuation (non représentés) individuels à chaque appareil utilisateur d'eau, ainsi que cela est bien connu en soi.

La sortie du tuyau de descente est reliée à un réseau d'égout (non représenté).

En « pied de colonne », c'est-à-dire au sous-sol de l'immeuble, les colonnes d'eau chaude 31 et d'eau froide 32 sont munies d'une électrovanne 41 près de la chaudière 34 pour la colonne 31, et d'une électrovanne 42 près de l'arrivée du réseau de distribution 35 pour la colonne 32.

A chaque étage E1, E2, E3, E4, etc., au-dessus de chaque plancher, les colonnes 31 et 32 sont munies d'électrovannes 43 et 44, et les dérivations 36 et 37 sont munies d'électrovannes individuelles 45 et 46.

Sur les colonnes montantes 31 et 32, et à chaque étage E1, E2, E3, E4, etc., au-dessous de chaque plancher, se trouvent des détecteurs 2 et des conduits d'évacuation 10 qui présentent une partie verticale sur laquelle sont disposés des palpeurs 13, 14 et 15 reliés par des fils conducteurs 16, 17 et 18 à un appareil de gestion et de contrôle 39.

A chaque étage E1, E2, E3, E4, etc., les deux conduits d'évacuation 10 aboutissent à un boîtier de sécurité 50 dont l'entrée 51 est munie d'un clapet de non retour 52. Le boîtier 50 présente d'une part une sortie inférieure 53 qui est raccordée par un tuyau 54 au tuyau de descente 33 et d'autre part une sortie supérieure 55 qui est raccordée à une conduite 56 commune à toutes les sorties supérieures de tous les boîtiers 50 des différents étages.

La conduite 56, qui est représentée ici sous forme d'un tuyau flexible, est spécifique à l'invention et est ajoutée à l'installation classique, qu'elle soit préexistante ou réalisée dès l'origine conformément à l'invention. Sa fonction sera décrite plus loin.

Enfin, l'appareil de gestion et de contrôle 39 est relié :
■ aux électrovannes 41 et 42 par des conducteurs 61 et 62,
■ aux électrovannes 43 et 44 par des conducteurs 63 et 64,
■ aux électrovannes 45 et 46 par des conducteurs 65 et 66,
■ à une alarme 67 par un conducteur 68.

Le fonctionnement de cette installation est le suivant :

En temps normal, il ne se produit aucune fuite et l'installation fonctionne normalement, toutes les électrovannes sont ouvertes et l'eau circule comme elle doit le faire.

Lorsqu'une fuite se produit à l'un quelconque des étages E1, E2, E3, E4, etc., les premières gouttes se dirigent toujours vers les murs et trouvent toujours un passage vers la gaine technique, ne serait-ce qu'en suivant les dérivations 36-37, qui traversent la paroi de la gaine technique de manière non rigoureusement étanche, et en suivant la colonne 31 et/ou la colonne 32 qui, également, traversent les planchers de manière non rigoureusement étanche.

Ces gouttes sont donc conduites vers l'un au moins des détecteurs 2 situés immédiatement au-dessous de chaque plancher, c'est-à-dire qu'une fuite est détectée à un niveau inférieur à celui auquel la fuite se produit.

Les gouttes passent devant les palpeurs 13, 14 et 15 comme on l'a décrit en regard de la figure 1, ce qui provoque l'envoi de signaux à l'appareil 39.

L'appareil 39 fonctionne avec un logiciel que l'on a programmé pour que des actions soient mises en oeuvre en fonction de la localisation du détecteur 2 et en fonctions des signaux des palpeurs 13, 14 et 15:
⇒ Quand une fuite se produit à l'étage E4 par exemple, elle est détectée à l'étage E3 et l'appareil 39 commande la fermeture des électrovannes 45 et 46 afin d'isoler l'étage E4, partant de l'hypothèse que la fuite s'est produite dans le local 24.
⇒ Si de l'eau continue de passer dans le conduit d'évacuation 10, on en déduit que la fuite provient de l'une des deux colonnes montantes 31 ou 32 car elle ne peut pas provenir d'un étage supérieur, du fait qu'elle aurait été localisée par un détecteur 2 situé plus haut. L'appareil 39 commande alors la fermeture des électrovannes 41 et 42, ce qui isole tout l'immeuble.
⇒ Si on détecte des fuites à plusieurs niveaux, l'appareil 39 commande la fermeture des électrovannes 45-46 à chaque étage correspondant et si les fuites continuent, l'appareil 39 commande la fermeture des électrovannes 41-42.
⇒ Si l'appareil 39 reçoit des signaux discontinus, « en clignotement », la fuite est analysée comme étant faible car ces signaux proviennent de gouttes et non d'un filet continu. Mais cette fuite peut être analysée de manière plus fine en tenant compte de la fréquence des signaux puisque des signaux séparés par de longues périodes de silence correspondent à une très faible fuite, alors qu'une fréquence élevée peut se situer au voisinage d'un filet continu, ce qui correspond à une fuite importante.
⇒ La commande de fermeture des électrovannes peut être temporisée, car si l'on a affaire à une fuite peu importante et vite localisée, elle peut être réparée rapidement. En effet, la fuite peut être tolérée car l'eau de fuite ne provoque aucun dégâts, du fait qu'elle est évacuée constamment par le tuyau 10, le boîtier 50, le tuyau 54 et le tuyau de descente de l'immeuble 33 jusqu'au réseau d'égout.
⇒ Si la fuite est très importante, son débit peut dépasser la capacité d'arrêt du détecteur 2, auquel cas de l'eau de fuite est normalement évacuée par le conduit 10 et la quantité d'eau non ainsi absorbée coule le long de la colonne jusqu'au détecteur 2 situé immédiatement au-dessous, c'est-à-dire à l'étage inférieur. Il y a donc progression de la fuite et celle-ci est considérée comme particulièrement grave, ce qui justifie la fermeture immédiate des électrovannes 41 et 42, car la progression de la fuite d'un étage Ex à un étage Ex-1 est reconnue par l'appareil 39 du fait qu'il reçoit des signaux successivement de deux détecteurs 2 situés l'un au-dessous de l'autre.
⇒ Les actions commandées par l'appareil 39 diffèrent selon les caractéristiques des signaux, conformément aux instructions du programme, à savoir qu'il commande d'une part les électrovannes de manière sélective non seulement en fonction de la localisation du détecteur en action mais également en fonction de l'importance de la fuite détectée, et d'autre part différentes alarmes :avertisseur sonore, diffusion de messages, alerte à un poste de contrôle, etc.

Parmi les incidents à surveiller, il faut citer l'engorgement du tuyau de descente 33 qui évacue les eaux usées de tous les étages ainsi que les fuites provenant des conduits d'évacuation 10.

Le boîtier 50 permet de surveiller la survenance de l'engorgement du tuyau 33.

En effet, lorsque le tuyau de descente 33 est bouché, le niveau des eaux usées monte et atteint le tuyau 54 de l'étage situé immédiatement au-dessus de l'endroit où s'est produit l'obturation du tuyau 33, de sorte que l'eau atteint l'intérieur du boîtier 50 et, en continuant de monter, provoque la fermeture du clapet de non-retour 52 et passe par la sortie supérieure 55 du boîtier 50 pour emprunter la conduite spécifique 56.

On dispose sur la sortie supérieure 55 un détecteur 57 relié par un conducteur 58 à l'appareil 39, afin que le passage d'eau par la sortie 55 soit détecté et que des signaux soient envoyés à l'appareil 39.

On comprend qu'il s'agit d'un événement majeur, c'est-à-dire d'une panne grave qui nécessite une action immédiate car c'est l'immeuble tout entier qui risque d'être privé d'évacuation et certains étages risquent également une intrusion d'eau usée par refoulement dans les conduits d'évacuation des lavabos, douches, éviers, etc.

L'appareil 39 est donc programmé pour déclencher une alerte et pour fermer les électrovannes 41 et 42 afin d'empêcher une arrivée d'eau qui, après usage, est appelée à repartir à très court terme dans le tuyau de descente 33 et, donc, à aggraver les refoulements d'eau usée.

Lorsque le détecteur 57 qui entre en action est situé à des étages bas : rez-de-chaussée ou étage E1 (premier étage), les électrovannes 41 et 42 sont fermées immédiatement car les boîtiers 50 subissent la somme des pressions d'eau des étages supérieurs et risquent d'éclater.

Les électrovannes 41 et 42 ne sont ré-ouvertes pour rétablir l'arrivée d'eau qu'après réparation et libération de l'évacuation par le tuyau de descente 33.

On note que lors d'un engorgement, le clapet 52 du boîtier 50 rempli est fermé et obture le conduit 10 correspondant, de sorte que l'évacuation d'eau de fuite par ce conduit 10 est interrompue, ce qui a pour conséquence de placer l'immeuble en situation précaire puisqu'une fuite survenant à ce moment serait détectée mais l'eau ne serait pas évacuée.

Il arrive qu'il soit nécessaire d'intervenir sur la tuyauterie indépendamment de l'existence de fuites, et l'intervention peut nécessiter le démontage d'un ou plusieurs éléments faisant partie de l'installation conforme à l'invention : détecteurs 2 et détecteurs 57, dont la présence est indispensable à la surveillance des fuites. Il est donc utile de s'assurer que tous les détecteurs 2 et 57 sans exception sont bien en place.

A cette fin, on peut prévoir sur chaque détecteur 2 et/ou 57 considéré comme d'importance majeure, un contacteur qui est neutre lorsqu'il est en bonne place et qui devient actif, notamment pour déclencher une alarme, quand il n'est plus à sa place normale.

Sur la figure 1, on voit qu'un contacteur 9 solidaire du détecteur 2 est placé contre la colonne montante 1 et est relié à l'appareil de gestion et de contrôle 39 par un conducteur 19. Lorsque le collier 5 est serré, l'ensemble est en place et le contacteur 9 est maintenu en appui contre la colonne montante 1. Le logiciel de l'appareil 39 considère que la situation est normale du fait qu'il reçoit par le conducteur 19 un signal conventionnel ou une absence de signal.

Si, au contraire, le détecteur 2 n'était pas en place, le contacteur 9 ne serait plus appuyé contre la colonne 1 et l'appareil 39 recevrait soit une absence de signal conventionnel, soit un signal d'alerte, auquel cas un avertissement serait signalé sur un tableau de surveillance, comme par exemple l'allumage d'un voyant et/ou l'émission d'un signal sonore. Cet avertissement est avantageusement individualisé, c'est-à-dire qu'il identifie le détecteur 2 défaillant.

Naturellement, on peut disposer les contacteurs 9 à des endroits différents, notamment entre le tuyau surveillé et le collier de serrage 5.

On peut également vérifier la présence effective des palpeurs 13-14-15 et/ou de leur connexion, en réalisant un circuit électrique fermé par les palpeurs et qui déclenche un avertissement lorsqu'il est ouvert par l'absence d'un palpeur ou par le retrait d'une connexion.

Les détecteurs 57 peuvent également être munis de contacteurs mais, pour ne pas surcharger le dessin, on n'a pas illustré ce montage sur la figure 2, surtout qu'il est à la portée de l'Homme de Métier.

Bien entendu, pour une surveillance accrue, on peut aussi disposer des détecteurs de type connu dans les pièces contenant des appareils utilisateurs d'eau : salles de bain, cuisines, etc., notamment des détecteurs d'humidité. Ces détecteurs peuvent être couplés à ceux de l'installation décrite, en les reliant à l'appareil 39 par des liaisons filaires ou hertziennes.

Si l'installation est soumise à une atmosphère humide, même faiblement, il peut se produire une condensation formant des gouttes sur les tuyaux surveillés, ce qui provoque nécessairement des coulures atteignant rapidement les détecteurs 2 et provoquant donc le fonctionnement intempestif de l'appareil 39 et la mise en marche d'une alerte alors qu'aucune fuite ne se produit.

Il est donc nécessaire d'assurer une protection contre ce phénomène de condensation, naturel, inoffensif mais parasite.

Cette protection peut être obtenue par divers moyens : revêtement ou enduction des tuyaux surveillés, aération-ventilation ou chauffage de la gaine technique.

On peut également éliminer les fausses alertes dues à la chute de quelques gouttes d'eau à l'intérieur des collerettes 3 des détecteurs 2 en disposant au-dessus de chaque détecteur exposé à cet incident un cache (non représenté) qui recouvre la collerette 3 tout en laissant subsister un passage annulaire entre lui et le tuyau surveillé.

Parmi les applications de l'invention, on peut citer les installations de chauffage central puisque de l'eau circule à tous les étages et dans toutes les pièces des locaux.

Pour la surveillance de fuites dans la tuyauterie de chauffage, on prévoit des détecteurs 2 à chaque étage, de la même manière que celle décrite ci-dessus afin de pouvoir localiser la fuite mais il suffit de prévoir deux électrovannes au sous-sol, une sur le tuyau de départ et une sur le tuyau de retour car en cas de fuite, on interrompt le chauffage de tout l'immeuble pendant la réparation, celle-ci ne durant jamais très longtemps, et de toutes façons moins qu'un temps de refroidissement sensible, grâce à l'inertie naturelle de la température ambiante.

## Revendications

1. Procédé pour la prévention de dégâts dus à des fuites de liquide d'une tuyauterie dans lequel circule ledit liquide, du type selon lequel on détecte l'existence de liquide de fuite à l'extérieur de tuyaux, **caractérisé en ce que** l'on détecte l'existence de liquide à l'extérieur de tuyaux (1-31-32) en pente ou verticaux, successivement à au moins deux niveaux distincts (13-14-15) afin de déduire l'existence d'une fuite par le déplacement de liquide en gouttes (A) ou en filets, et non par la simple présence de liquide à un endroit donné.

2. Procédé selon la revendication 1, **caractérisé en ce que** l'on détecte l'existence de liquide à trois niveaux distincts : un niveau supérieur (13) et deux niveaux inférieurs rapprochés (14 et 15).

3. Procédé selon la revendication 1, **caractérisé en ce que** l'on récupère le liquide ayant passé par deux niveaux distincts et on l'évacue.

4. Procédé selon la revendication 1, **caractérisé en ce que** l'on commande une action telle que la fermeture et/ou l'ouverture d'électrovannes (41-42, 43-44, 45-46) , et/ou la mise en fonction d'un dispositif d'alarme (67), après que l'on ait détecté le passage de liquide à deux niveaux distincts.

5. Procédé selon la revendication 4, **caractérisé en ce que** l'on temporise la commande d'action, afin qu'il s'écoule un certain temps entre l'instant de la détection et l'instant de la commande.

6. Procédé selon la revendication 1, **caractérisé en ce que** l'on crée un signal de détection pour chaque passage de liquide, afin de différencier un passage par gouttes successives d'un passage par filet continu, et l'on commande une ou plusieurs actions de manière différente selon le nombre et la fréquence des signaux de détection.

7. Installation de circulation de liquide, adaptée à la prévention de dégâts dus à des fuites, formée d'une tuyauterie comprenant d'une part des tuyaux dits « d'arrivée » dont l'entrée est raccordée à au moins une arrivée de liquide et dont la sortie est éventuellement ramifiée en dérivations et, d'autre part, des tuyaux dits « d'évacuation » dont l'entrée est éventuellement ramifiée en dérivations et dont la sortie est raccordée soit à une évacuation soit à un dispositif de traitement et de recyclage, du type selon lequel des détecteurs de liquide de fuite sont placés à l'extérieur de tuyaux et assujettis à ceux-ci, **caractérisé en ce que** chaque détecteur (2) comprend un collecteur de liquide situé contre la paroi extérieure d'un tuyau (1-31-32) en pente ou vertical et qui est raccordé à l'entrée d'un conduit d'évacuation (10) auquel sont fixés au moins deux palpeurs indépendants (13-14-15) qui sont placés à au moins deux niveaux distincts et qui sont reliés à un appareil (39) susceptible d'une part de générer des signaux propres à chaque palpeur et constituant autant d'informations, et d'autre part de traiter ces informations, puis de provoquer, éventuellement, la mise en action d'un ou plusieurs dispositifs de sécurité tels qu'électrovanne(s) (41-42, 43-44, 45-46) et/ou alarme(s) (67).

8. Installation selon la revendication 7, **caractérisée en ce que** le collecteur de liquide est une gouttière circulaire (3-4-5) qui ceinture le tuyau (1-31-32).

9. Installation selon la revendication 7, **caractérisée en ce que** le collecteur de liquide est un godet placé contre le tuyau (1).

10. Installation selon la revendication 7, **caractérisée en ce que** le collecteur de liquide comporte une bague placée autour d'un tuyau (1) et munie d'une garniture d'étanchéité (4).

11. Installation selon la revendication 7, **caractérisée en ce que** la partie de tuyauterie composée d'au moins un tuyau vertical d'arrivée (1-31-32) et d'au moins un tuyau vertical d'évacuation (33) munis de piquages de dérivations (36-37-38) étant située dans un espace spécifique, un détecteur (2) au moins est prévu soit sur un tuyau vertical (1-31-32), soit sur chaque dérivation (36-37) raccordée au tuyau d'arrivée (31-32).

12. Installation selon la revendication 11, **caractérisée en ce que** l'espace spécifique étant sectionné par des cloisons transversales traversées par les tuyaux verticaux (31-32-33), il y a au moins un détecteur (2) au-dessous de chaque cloison transversale, soit sur un tuyau vertical (31-32), soit sur chaque dérivation (36-37) raccordée au tuyau d'arrivée (31-32).

13. Installation selon la revendication 7, **caractérisée en ce que** la sortie de chaque conduit d'évacuation (10) est raccordée à une entrée (51) d'un boîtier (50) munie d'un clapet de non-retour (52), boîtier (50) qui présente deux sorties (53 et 55) dont l'une (53) située à la partie inférieure du boîtier (50) est raccordée au tuyau d'évacuation (54), et l'autre (55) située à la partie supérieure du boîtier (50) est raccordée à une conduite (56) spécifique à l'évacuation des fuites et normalement vide, qui s'étend jusqu'au niveau le plus bas de l'installation.

14. Installation selon la revendication 13, **caractérisée en ce que** le boîtier (50) est muni d'un détecteur de liquide (57) placé sur la sortie (55) située à la partie supérieure dudit boîtier (50).

15. Installation selon la revendication 7, **caractérisée en ce que** l'appareil (39) auquel sont reliés les palpeurs (13, 14 et 15) des détecteurs (2) est connecté à l'élément moteur d'électrovannes (41-42, 43-44, 45) dont une au moins (41-42 et 43-44) est intercalée sur le tuyau d'arrivée (31-32), et une (45-46) sur chaque dérivation (36-37) raccordée au tuyau d'arrivée (31-32).

16. Installation selon la revendication 15, **caractérisée en ce que** les détecteurs (2) et les électrovannes (45-46) qui sont intercalées sur les dérivations (36-37) et qui sont commandées par l'appareil (39) en fonction de ces mêmes détecteurs (2), sont placés à deux niveaux différents, les détecteurs (2) étant au-dessous des électrovannes (45-46).

17. Installation selon la revendication 7, **caractérisée en ce qu'**elle est destinée à la circulation d'eau dans un bâtiment, et comprend d'une part au moins un tuyau d'arrivée, dit « colonne montante » (32) ayant une entrée qui est raccordée à au moins une arrivée d'eau telle qu'un réseau de distribution (35), et une sortie qui est raccordée par des dérivations à des robinets d'appareils utilisateurs d'eau, et d'autre part au moins un tuyau d'évacuation dit « colonne d'évacuation » (33) ayant une entrée raccordée par des dérivations à des orifices de vidange d'appareils utilisateurs d'eau, et une sortie qui est raccordée à un réceptacle d'évacuation tel qu'un réseau d'égouts.

18. Installation selon la revendication 17, **caractérisée en ce que** comprenant une colonne montante (31) pour l'eau froide et une colonne montante (32) pour l'eau chaude, un détecteur (2) au moins est prévu sur chacune des deux colonnes montantes (31 et 32).

19. Installation selon la revendication 17, qui se trouve dans un bâtiment du type collectif à plusieurs étages (E2, E3, E4) et plusieurs locaux privatifs (23-24), et comprenant un espace vertical spécifique dit « gaine technique » dans lequel se trouvent la colonne montante (31-32) et la colonne d'évacuation (33) qui sont chacune raccordées à au moins une dérivation non verticale (36-37-38) pour chacun des locaux privatifs, **caractérisée en ce qu'**un détecteur (2) au moins est prévu soit sur une colonne (31-32), soit sur chaque dérivation (36-37).

20. Installation selon la revendication 19, **caractérisée en ce que** la gaine technique étant sectionnée par des planchers situés à chaque étage et traversés par la tuyauterie, il y a au moins un détecteur (2) au-dessous de chaque plancher, soit sur une colonne (31-32), soit sur une dérivation (36-37).

21. Installation selon la revendication 17, **caractérisée en ce que** l'appareil (39) auquel sont reliés les palpeurs (13, 14 et 15) des détecteurs (2) est connecté à l'élément moteur d'électrovannes (41-42, 43-44, 45-46) dont une, au moins (41-42), est intercalée à la partie inférieure de la/chaque colonne montante (31-32).

22. Installation selon la revendication 17, **caractérisée en ce que** l'appareil (39) auquel sont reliés les palpeurs (13, 14 et 15) des détecteurs (2) est connecté à l'élément moteur d'électrovannes (45-46) intercalées sur les dérivations (36-37) raccordées à une colonne montante (31-32).

23. Installation selon la revendication 21, **caractérisée en ce qu'**elle comprend un tuyau d'arrivée et un tuyau d'évacuation dit « de retour » raccordés d'une part à une chaudière et d'autre part à des radiateurs de chauffage, et deux électrovannes sont intercalées à la partie inférieure respectivement du tuyau d'arrivée et du tuyau de retour.

24. Installation selon la revendication 22, **caractérisée en ce qu'**elle comprend un tuyau d'arrivée et un tuyau d'évacuation dit « de retour » raccordés d'une part à une chaudière et d'autre part à des radiateurs de chauffage et une électrovanne est intercalée sur chaque dérivation du tuyau d'arrivée.

25. Installation selon la revendication 7, **caractérisée en ce que** les détecteurs sont réalisés en matériau non métallique, excepté des conducteurs électriques (16, 17, 18, 19, 58, 61, 62, 63, 64, 65, et 66) qui équipent les palpeurs (13, 14 et 15).

26. Installation selon la revendication 7, **caractérisée en ce que** certains au moins des détecteurs (2) sont munis d'un contacteur (9) relié électriquement à l'appareil (39) et susceptible de provoquer le déclenchement d'une alarme lorsqu'il n'est plus dans la position normale qui est la sienne lors de la mise en place des détecteurs (2).

27. Installation selon la revendication 7, **caractérisée en ce que** les tuyaux auxquels un détecteur (2) est assujetti sont protégés contre l'humidité et la condensation, notamment par un revêtement hydrophobe, une garniture en mousse synthétique, un dispositif d'aération et/ou de chauffage, ou analogue.

28. Installation selon la revendication 7, **caractérisée en ce que** certains au moins des collecteurs de liquide sont surmontés d'un cache qui laisse passer le liquide ruisselant contre le tuyau (1) mais non les liquides susceptibles de tomber librement, notamment de l'eau de condensation.
